Europäisches Patentamt

European Patent Office

Office européen des brevets

(19)

(11) Publication number: **0 684 210 A1**

(12) **EUROPEAN PATENT APPLICATION**
**published in accordance with Art.**
**158(3) EPC**

(21) Application number: **94931192.2**

(22) Date of filing: **31.10.94**

(86) International application number:
**PCT/JP94/01835**

(87) International publication number:
**WO 95/16638 (22.06.95 95/26)**

(51) Int. Cl.6: **C02F 1/50**, C02F 1/28

(30) Priority: **13.12.93 JP 342361/93**
**08.09.94 JP 214473/94**

(43) Date of publication of application:
**29.11.95 Bulletin 95/48**

(84) Designated Contracting States:
**BE CH DE DK FR GB IT LI NL SE**

(71) Applicant: **SUNTORY LIMITED**
**1-40, Dojimahama 2-chome**
**Kita-ku,**
**Osaka-shi,**
**Osaka-fu 530 (JP)**
Applicant: **KURARAY CHEMICAL CO., LTD.**
**4342 Tsurumi**
**Bizen-City**
**Okayama 705 (JP)**
Applicant: **TAKUMA CO., LTD.**
**3-23, Dojima Hama 1-chome**
**Kita-ku,**
**Osaka-shi,**
**Osaka 530 (JP)**

(72) Inventor: **MATSUMOTO, Nobuya Suntory**
**Limited, Bio**
**Process Development Center**
**1023-1,**
**Oaza Yamazaki**
**Shimamoto-cho**
**Mishima-gun**
**Osaka 618 (JP)**
Inventor: **KUNISAKI, Shinichi Suntory Limited,**
**Bio**
**Process Development Center**

**1023-1, Oaza Yamazaki**
**Shimamoto-cho**
**Mishima-gun**
**Osaka 618 (JP)**
Inventor: **FUJII, Yohichi**
**Kuraray Chemical Co., Ltd.**
**4342, Tsurumi**
**Bizen-shi**
**Okayama 705 (JP)**
Inventor: **TSUSHIMA, Tetsuya Kuraray**
**Chemical Co., Ltd.**
**4-14, Shibata 1-chome**
**Kita-ku**
**Osaka-shi**
**Osaka 530 (JP)**
Inventor: **FUJIWARA, Goro**
**Takuma Co., Ltd.**
**3-23, Dojimahama 1-chome**
**Kita-ku**
**Osaka-shi**
**Osaka 530 (JP)**
Inventor: **MASUDA, Mitsunobu**
**Takuma Co., Ltd.**
**3-23, Dojimahama 1-chome**
**Kita-ku**
**Osaka-shi**
**Osaka 530 (JP)**

(74) Representative: **Solf, Alexander, Dr.**
**Patentanwälte**
**Dr. Solf & Zapf**
**Candidplatz 15**
**D-81543 München (DE)**

(54) **WATER PURIFYING MATERIAL, PROCESS FOR PRODUCING THE SAME, AND WATER PURIFICATION**

**EQUIPMENT.**

(57) A water purifying material which is used for treating water for domestic and industrial uses and comprises activated carbon and zeolite containing silver combined therewith or a zirconium phosphate compound containing silver supported thereon. The material has an excellent antibacterial activity, a high rate of operation, and an improved function of adsorbing and removing various factors detrimental to the taste of water, such as limy odor due to free chlorine, impurities, malodorous materials and musty odor. The invention material serves to solve the problems of the conventional materials, such as a reduced rate of operation resulting from the necessity for prolonged thermal sterilization for providing aseptic treated water and, particularly in the thermal sterilization using boiler water, the contamination of treated water with boiler chemicals.

FIG. 2

[TECHNICAL FIELD]

This invention relates to a water purifying material and a manufacturing method therefor, and a water purifying system. More particularly, the invention relates to a water purifying material for use in purifying water for household use and water for industrial use, and a manufacturing method therefor, and a water purifying system of industry scale that uses said water purifying material. To describe the water purifying system in detail, the system is intended to provide water required in various industries such as the food industry, medical supplies industry and semiconductor industry, that is water stripped of free chlorine and organic matters. Specifically, it is an activated carbon water treatment system having an activated carbon filtration tower for adsorbing and removing free chlorine and organic matters from raw water supplied through a raw water supply line, and delivering treated water to a treated water takeout line, and a free chlorine injecting device for injecting free chlorine into said raw water supply line.

[Background Art]

In recent years, a deterioration in the quality of household water with changes in living environment has become a serious problem in urban areas. For this reason, liquid chlorine is added to tap water in an increasing quantity, so that tap water always has a strong chemical smell.

In recent years, many water purifiers have been sold in order to remove the strong chemical smell for improving tastes of tea, coffee and the like. The water purifying material used in these water purifiers is activated carbon in most cases. These water purifiers have an excellent function to remove the chemical smell due to free chlorine. However, since free chlorine is removed from tap water, spores of miscellaneous germs contained in the water often germinate and the miscellaneous germs breed in the water purifying material. As a result, bad smells generated from the miscellaneous germs are added to the water treated by the water purifiers to impair the taste of purified water. It has been pointed out that, in addition, the water purifying material itself becomes insanitary.

To solve such a problem, water purifying materials having activated carbon impregnated with silver have been used; many water purifying materials with various filter materials besides the silver impregnated activated carbon have been developed. Trace quantities of silver contained in these water purifying materials have been recognized to be effective to prevent miscellaneous germs from being generated in the water purifying materials. However, these water purifying materials allow silver to elute in a relatively large quantity, which has been problematic from a standpoint of hygiene. In the prior art, since antibacterial activity is dependent on silver ion elution, the antibacterial activity is maintained for a very small number of days, and therefore not suited for industrial use.

Under the circumstances, there has been a strong demand for a water purifying material which maintains steady antibacterial activity over a long period, with little silver elution, while producing excellent water purifying and miscellaneous germ proliferation preventing effects.

On the other hand, with the above water purifying system implemented on an industrial scale, free chlorine is injected into the raw water supply line extending to the activated carbon filtration tower. The sterilizing ability of free chlorine can maintain the interior of the raw water supply line in sterile condition. Besides, even where raw water is underground water or river water including organic matters, the organic matters may be removed from the raw water by the organic matter adsorbing action of activated carbon in the activated carbon filtration tower. However, where organic matters are contained in raw water, in additon to the raw water losing sterilizing ability due to the adsorption by activated carbon of free chlorine, the activated carbon adsorbs the organic matters to increase an organic matter concentration on surfaces of the activated carbon, whereby the activated carbon filtration layer in the activated carbon filtration tower offers an optimal condition for breeding of viable cells. As a result, viable cells just multiply in the activated carbon filtration layer and mix into treated water. It is thus impossible to obtain sterile treated water.

Under the circumstances, it has been conventional practice to supply heat sterilizing hot water or boiler steam periodically to the activated carbon filtration layer to sterilize activated carbon surfaces by heating.

The conventional sterilization technique based on heat sterilization achieves sterilization immediately after a sterilizing operation, but it has been inevitable that viable cells multiply with passage of time. Viable cells are detected in treated water without exception upon lapse of, for example, 40-48 hours after sterilization when water temperature is 15deg.C or below, and 24 hours or more after sterilization when water temperature is 15deg.C or above. That is, viable cells mix into treated water, and moreover viable cells increase rapidly with progress of time.

To achieve sterilization of treated water by the above prior art, it is necessary to take a heat sterilizating step once a day, immediately before operation of the water treatment system. This heating consumes time,

3

resulting in the inconvenience of a greatly lowered operation rate for water treatment of the activated carbon filtration tower.

Particularly in the case of heat sterilization by boiler steam. It has been inevitable that chemicals for boilers, such as hydrazine and morpholine, contained in the boiler steam mix into treated water.

A first object of the present invention is to develop and provide a water purifying material having an excellent effect of suppressing miscellaneous germs generated inside, in addition to a general, water purifying effect such as removal of chemical smell and musty smell.

A second object of the present invention is to provide a method of manufacturing such a water purifying material.

A third object of the present invention is to provide a water purifying system for obtaining sterile water stripped of free chlorine and organic matters while maintaining a high operation rate of an activated carbon filtration tower.

[DISCLOSURE OF THE INVENTION]

To fulfill the above objects, a water purifying material of the present invention is characterized by comprising zeolite having silver bonded thereto or a zirconium phosphate compound having silver bonded thereto, and activated carbon.

Further, the water purifying material of the present invention is characterized in that content of the silver bonded to the zeolite or the zirconium phosphate compound is 0.01-3.00% of the entire water purifying material.

Conventionally, where silver is used as a water purifying material, activated carbon is used as its support. Inventors have found that, where tap water is passed, in the same condition as in the case of silver-impregnated activated carbon, through a mixture of activated carbon and an antibacterial material consisting of zeolite having silver bonded thereto, instead of activated carbon, or a zirconium phosphate compound having silver bonded thereto, the water purifying material exhibits excellent antibacterial ability and allows very little elution of silver into purified water. Further, it has been found that the mixture of zeolite having silver bonded thereto or a zirconium phosphate compound having silver bonded thereto, and activated carbon, produces an excellent water purifying effect with the adsorbing effect of activated carbon. The present invention has been completed based on these findings.

Thus, the water purifying material according to the present invention is highly antibacterial and allows very little elution of silver into purified water.

While the most salient characteristic of the water purifying material of this invention is the excellent antibacterial activity, it also has an excellent function to remove the chemical smell due to free chlorine, impurities, smelly components, and other components giving mold smell and the like which are detrimental to the taste of water.

The present invention will be described in greater detail hereinafter.

It is necessary for the water purifying material of the present invention to contain zeolite having silver bonded thereto or a zirconium phosphate compound having silver bonded thereto, and activated carbon. For example, zeolite is formed mainly of aluminosilicate of alkaline metal or alkaline earth metal, and forms a three-dimensional framework having large regular cavities, with $SiO_2$ tetrahedra and $AlO_4$ tetrahedra of methane type structure sharing one carbon atom each.

With an annular structure of oxygen forming the zeolite framework, zeolite has a fixed pore diameter in the range of 3 to 10 Å, and has adsorptivity and molecular sieving ability based on this porous structure. Thus, ion-bonded silver in the pores of zeolite itself is little ionized, and therefore does not elute in a dissolved ion concentration such as in tap water.

While various types of zeolite having a very uniform pore diameter have been synthesized, it is also found in the form of glauconite, zeolite and the like in nature. Natural zeolite as well as various types of synthetic zeolite may be used as the base of the water purifying material of the present invention. Having the above-noted composition, zeolite is harmless in terms of hygiene.

Silver ions, copper ions and the like are known to have antibacterial activity to bacteria and molds, and are suited for water purifying materials since they are inorganic and has antibacterial activity to wide ranges of bacteria and molds. However, from the standpoint of hygiene, these heavy metal ions cannot be injected directly into tap water. However, when ion-bonded to atoms forming the porous structure of zeolite framework, these antibacterial metal ions hardly elute into tap water under treatment, and give a high degree of antibacterial activity to the water purifying material.

Many heavy metal ions including copper ions cannot be used since they could change into various compounds in water to exhibit toxicity. However, silver is most suited for providing a water purifying material with antibacterial activity since it hardly becomes a toxic compound even if it elutes into water to produce a trace quantity of silver ions.

The antibacterial ability according to the present invention is based on a technical concept basically different from the principle of expecting antibacterial ability from eluting silver ions as in the conventional silver-impregnated activated carbon. Bacteria are killed through contact with bonded silver ions dispersed in the zeolite. Further, because of little elution into water, the water purifying material may advantageously be used over a long period of time. This is the most salient characteristic of the water purifying material according to the present invention.

The zirconium phosphate compound is similar in property to zeolite and, with silver bonded thereto, exhibits the same antibacterial activity as zeolite having silver bonded thereto. Thus, this compound may also be used as the water purifying material according to the present invention.

Conventionally, activated carbon has been used as a support for impregnating silver. Where the water purifying material is impregnated with a quantity of silver to provide sufficient antibacterial activity for purifying tap water passed therethrough, it often exceeds 50ppb which is regarded as a safety criterion for hygiene. As shown in Table 1, silver impregnated even in a trace quantity would elute in a considerable quantity. It is therefore difficult to increase the quantity of impregnation, which may result in insufficient antibacterial activity and a relatively short period of use.

By contrast, zeolite or the zirconium phosphate compound, even where silver is bonded in a quantity to provide sufficient antibacterial activity, allows only a very small quantity of elution. In this regard, it has a great advantage over the conventional silver-impregnated activated carbon.

Silver ions of the zeolite having silver bonded thereto or the zirconium phosphate compound having silver bonded thereto are considered to exhibit antibacterial activity based on enzyme inhibition in the respiratory system and basal metabolic system, mass transfer inhibition in the cell membranes or the like of microorganism cells contacting the silver ions. This antibacterial effect is considered to provide a deodorizing activity based on prevention of growth of bacteria which would cause a disagreeable taste and disagreeable smell. When removing free chlorine in tap water, bacteria which could be generated in the water purifying material include E.coli and Staphylococcus aureus as well as common bacteria. It has been confirmed that this water purifying material has strong antibacterial activity to these and other bacteria.

The quantity of silver bonded to zeolite is not limited to a particular value. It is preferably 0.5 to several percent for use as a water purifying material, considering its antibacterial activity in the presence of activated carbon.

It is necessary for the water purifying material according to the present invention to contain activated carbon besides the zeolite having silver bonded thereto or the zirconium phosphate compound having silver bonded thereto. The activated carbon used as a base here normally has a surface area of several hundred $m^2$ or more per gram. A wide range of carbon materials having a high degree of adsorptivity may be used. Carbide of coconut husk, wood or the like is normally used as a raw material for activated carbon, but anything may be used. Activation may be effected in a hot atmosphere of water vapor or carbon dioxide.

As for the shape of activated carbon, crushing, pellets or granules are all effective. It may be convenient to form a sheet-like adsorption layer impregnated with pelletized or activated carbon in view of pressure loss and facility of changing and other types of handling. Carbon pellets are prepared by a usual method, i.e. adding 30 to 60 parts of petroleum pitch, coal tar or the like as a binder to 100 parts of a carbonaceous material, mixing, shaping and then activating them.

Activated carbon exhibits a high degree of adsorptivity as a very specific nonpolar adsorber with respect to almost all matters dissolved in water. It is highly effective to purify tap water by adsorbing and removing free chlorine giving the chemical smell and other components detrimental to the taste of tap water.

The water purifying material according to the present invention contains zeolite having silver bonded thereto or a zirconium phosphate compound having silver bonded thereto, and activated carbon. The silver bonded mainly provides the water purifying material with antibacterial activity. The adsorptivity of activated carbon removes impurities, smelling components and mold smell from tap water. These two components produce a synergistic effect of purification, especially providing the water purifying material with antibacterial activity to realize a long period of use.

The mixing ratio in the water purifying material between the zeolite having silver bonded thereto or the zirconium phosphate compound having silver bonded thereto, and activated carbon is not limited to a particular ratio. Taking the water purifying effect into account, the above-noted antibacterial material should preferably be in a quantity necessary to provide antibacterial activity, allowing use of as much activated carbon as possible.

The quantity of silver content in the water purifying material is not limited to a particular value, but should preferably be 0.01 to 3.00% of the entire water purifying material. Where silver content is less than 0.01%, the antibacterial activity tends to lower. Where silver content exceeds 3.00%, silver elution tends to increase without significantly improving the antibacterial activity.

Further, a method of manufacturing a water purifying material, according to the present invention, is characterized by comprising mixing and crushing zeolite having silver bonded thereto or a zirconium phosphate compound having silver bonded thereto, and a carbonaceous material, adding and mixing a binder and, if necessary, an admixture, to form charcoal pellets or charcoal granules, oxidizing same in an atmosphere including oxygen at 300deg.C or below, dry-distilling and carbonizing same in an inert gas, and thereafter activating same.

According to this invention, a water purifying material is manufactured which is highly antibacterial and allows very little elution of silver.

To prepare the water purifying material of the present invention, zeolite having a predetermined quantity of silver bonded thereto or a zirconium phosphate compound having silver bonded thereto, and a carbonaceous material, are mixed and crushed well, and then pitch, coal tar or the like as a binder and, if necessary, water, heavy oil or the like as an admixture are added thereto and mixed in a mixer to form carbon pellets or carbon granules. The granules are formed, preferably, by crushing pellets and screening them to obtain a fixed range of grain sizes to realize an improved water cleaning property.

It is necessary to oxide the carbon pellets or carbon granules in an atmosphere including oxygen at 300deg.C or below. Here, the atmosphere including oxygen is air, a gaseous mixture of oxygen and nitrogen, a gas including oxygen in water vapor or carbon dioxide, or the like. Water vapor, carbon dioxide or the like is inactive to the carbonaceous material at 300deg.C or below. Through this step, the carbon pellets or carbon granules are oxidized and oxygen atoms are bonded to surfaces of the carbonaceous material.

It is necessary to dry-distill and carbonize the oxidized carbon pellets or carbon granules in an inert gas. To carbonize the carbon pellets or carbon granules fully, the dry-distilling temperature must be increased to 600 to 650deg.C. Here, the inert gas is a gas inactive to the carbonaceous material in the above temperature range. That is, it normally means nitrogen gas, and inclusion of a small quantity of carbon dioxide is permissible. Through this step, the carbon pellets or carbon granules are completely carbonized, with the binder for granulation and the component added as admixture also becoming carbonaceous as a result of this step.

The highly antibacterial water purifying material of the present invention is obtained through subsequent activation in a hot activating atmosphere. The activating atmosphere is water vapor, carbon dioxide, a gaseous mixture of the two, or the like. Preferably, the activating atmosphere has a high content of water vapor, and a composition including carbon dioxide, e.g. a gas obtained by combusting liquefied petroleum gas. The water purifying material obtained in this way has only the zeolite having silver bonded thereto or the zirconium phosphate compound having silver bonded thereto, and activated carbon.

In the above manufacturing method, the steps of mixing and crushing zeolite having silver bonded thereto or a zirconium phosphate compound having silver bonded thereto, and a carbonaceous material, to form carbon pellets or carbon granules, oxidizing same in an atmosphere including oxygen at 300deg.C or below, dry-distilling and carbonizing same in an inert gas, and thereafter activating same, are the characterizing steps in the method of manufacturing the water purifying material. With the above manufacturing method, the excellent water purifying material of the present invention is obtained from the synergistic effect of zeolite having silver bonded thereto and activated carbon. However, the water purifying material of the present invention should not be understood to be limited to the product of the above method.

Thus, the water purifying material according to the present invention has an excellent water purifying effect based on the synergistic effect of the antibacterial activity of the zeolite having silver bonded thereto or the zirconium phosphate compound having silver bonded thereto, and the adsorptivity of activated carbon for adsorbing and removing free chlorine, impurities, smelly components, and mold smell and the like from tap water. Further, the invention provides a water purifying material, and its manufacturing method, which is characterized by a very small quantity of silver elution into purified water, which may be used over a long period of time, and which is suited particularly to a large-scale industrial water purifier.

Further, a water purifying system, according to the present invention, is characterized by comprising an activated carbon regenerating device for supplying hot water to the activated carbon filtration layer to regenerate the activated carbon, the activated carbon filtration layer being mounted in the activated carbon filtration tower and having dispersed therein the water purifying material according to the present invention noted above.

According to the present invention, the activated carbon filtration layer has dispersed therein the water purifying material according to the invention noted above. It is therefore possible, by appropriately selecting a mixing quantity of the water purifying material, i.e. a mixing quantity of silver ions, in accordance with a quantity of activated carbon in the activated carbon filtration layer, to inhibit breeding of viable cells in the activated carbon filtration layer, thereby to maintain the activated carbon filtration layer in sterile condition, although adsorption of organic matters increases a concentration of organic matters so that activated carbon surfaces provide optimal environment for breeding of viable cells. It has been found as a result of research and experiment that sterilization of the activated carbon filtration layer is achieved where the quantity of silver included in the activated carbon filtration layer is 0.01 to 3.00% of the entire quantity of activated carbon which is a sum of the activated carbon filling the activated carbon filtration layer and the activated carbon included in the water purifying material.

Moreover, it is conceivable to use, as a device for sterilizing the activated carbon filtration layer by rendering it antibacterial, activated carbon called antibacterial carbon, i.e. activated carbon impregnated with a silver compound and exhibiting antibacterial ability by dissolving silver ions in water under treatment. In this case, the antibacterial ability is based on elution of silver ions into water under treatment, that is silver is consumed in water treatment and the antibacterial carbon loses its antibacterial ability in about one month. To maintain the antibacterial ability of the activated carbon filtration layer, a costly and troublesome maintenance operation to change the antibacterial carbon is required.

As a device for sterilizing the activated carbon filtration layer by rendering it antibacterial with use of silver zeolite, it is conceivable to disperse silver zeolite as it is in the activated carbon filtration layer. In this case, silver zeolite is brittle and would soon become fine particles. With progress of water treatment, the zeolite becomes fine particles to be drained. As a result, as in the foregoing case, the antibacterial ability gradually lowers with water treatment, making it impossible to maintain the desired sterile condition of the activated carbon filtration layer. This requires a costly and troublesome maintenance operation to supplement silver zeolite.

By contrast, according to the present invention, silver ions which kill viable cells through physical contact therewith are dispersed in the activated carbon filtration layer in the form of the water purifying material with little elution into water, to render the activated carbon filtration layer antibacterial. Thus, the antibacterial ability is maintained with no maintenance operation or, if at all, a very minor operation.

Moreover, an activated carbon regenerating device is provided by effectively utilizing sterilization in a raw water supply line extending to the activated carbon filtration tower, which is based on injection of free chlorine such as of hypochlorous acid soda into raw water, i.e. by effectively utilizing change of organic matters in raw water into low boiling point organic chlorine compounds adsorbed to the activated carbon surfaces to be dissolvable through contact with hot water at 80 to 100deg.C The activated carbon is regenerated by dissolving the organic chlorine compounds adsorbed to the activated carbon by supplying hot water to the activated carbon filtration layer. The desired ability of the activated carbon filtration layer to remove organic matters and free chlorine, may be recovered by suitably regenerating the activated carbon with the activated carbon regenerating device before the activated carbon surfaces are saturated with organic chlorine compounds adsorbed thereto to inhibit the adsorbing ability of the activated carbon.

In this invention, hot water is used as heating means. Where hot water is circulated, as described in the embodiment to follow, once the water is heated to a predetermined temperature (about 85deg.C), a small amount of heat may be supplied at a hot water circulating step to compensate for a radiation heat loss, which greatly facilitate temperature control.

Consequently, removal of organic matters and free chlorine and sterilization water under treatment may be carried out without lowering the operation rate of the activated carbon filtration tower. This is achieved with little consumption of silver ions providing the antibacterial ability, thereby reducing running cost. This, combined with the low cost involved in removal of organic matters and free chlorine with regenerated activated carbon, provides a water purifying system implemented at low cost.

[BRIEF DESCRIPTION OF THE DRAWINGS]

Fig. 1(a) shows raw water treatment periods and changes in the number of bacterial colonies formed in purified water in Comparative Example 6;

Fig. 1(b) shows raw water treatment periods and changes in the number of bacterial colonies formed in purified water in Embodiment 9;

Fig. 2 is a view of an outline construction showing a water treating state;

Fig. 3 is a view of an outline construction showing a hot water circulating and regenerating state;

Fig. 4 is a view of an outline construction showing a raw water cleaning state;

Fig. 5(a) is a graph showing changes in viable cell count in a conventional activated carbon filtration tower occurring with progress of time;

Fig. 5(b) is a graph showing changes in viable cell count in an activated carbon filtration tower of the present invention occurring with progress of time;

Fig. 6 is a graph showing a relationship between quantity of filtered water and removal rate;

Fig. 7 is a graph showing a relationship between flow rate and quantity of silver ion elution;

Fig. 8 is a view of an outline construction showing a water treating state in a different embodiment;

Fig. 9 is a view of an outline construction showing a hot water circulating and regenerating state in the different embodiment;

Fig. 10 is a view of an outline construction showing a raw water cleaning state in the different embodiment.

[THE BEST MODE FOR CARRYING OUT THE INVENTION]

Embodiments of the present invention will be described in detail with reference to the drawings.

Water purifying materials and manufacturing methods thereof will be shown first.

[1] (Embodiments 1-6; Comparative examples 1-3)

Synthetic zeolite bonded with silver at 2.2 % was added to 100 parts of coconut husk carbon to make silver contents as shown in Table 1, and the mixture was crushed well in an atomizer mill. Then, 30 parts of pitch acting as a binder, 18 parts of heavy oil acting as an admixture, and 10 parts of water were added thereto and mixed fully in a mill. Next, the mixture was formed into carbon pellets 4mm∅ in diameter in a pellet mill, which were then crushed and sized to 7-16 mesh with a vibrating screen to obtain granulated carbon of substantially uniform grain size. The sample in Embodiment 6 had the same silver-bonded zeolite content as that in Embodiment 5, which was prepared by using zeolite with an increased quantity of silver bonded thereto.

The granulated carbon was put into a fluidization roaster, and was oxidized by heating to 165-180deg.C while blowing in air. Furthermore, it was gradually heated, with air shut off, to dry-distill and carbonize it at 530-630deg.C. By the dry distilling, its packed specific gravity fell from 0.705 to 0.590. Next, the dry-distilled carbon was put into an activation roaster and activated at 700-950deg.C by blowing in kerosene combustion gas to obtain water purifying materials.

The water purifying materials obtained as above had silver contents at 0.002% (Embodiment 1), 0.05% (Embodiment 2), 0.29% (Embodiment 3), 0.8% (Embodiment 4), 1.2% (Embodiment 5) and 3.5% (Embodiment 6), respectively. For comparison, samples were prepared by similar methods from activated carbon impregnated with silver, which had silver contents at 0.009% (Comparative Example 1) and 0.071% (Comparative Example 2), and from activated carbon not impregnated with silver (Comparative Example 3).

The samples prepared in this way were tested for their functions as water purifying materials. Tap water was passed therethrough in the following manner, and the quantity of silver elution, the quantity of residual free chlorine and mold formation were examined.

The quantity of silver elution was measured with a frameless atomic absorption photometer (using a pyrolytic graphite tube) based on a food additive testing method. The quantity of residual free chlorine was measured by filling a cartridge with 250g of sample, causing 50 lit. of tap water to flow therethrough at 2 lit./min. and immediately thereafter measuring free chlorine remaining in the tap water.

The quantity of free chlorine contained in raw tap water was 1.2ppm.

The mold formation examination was conducted by crushing the above-mentioned samples, and preparing test pieces by uniformly impregnating a small quantity of latex on polyurethane foam sheets of 5cm square as a binder, and sterilizing them with alcohol, followed by air drying. The test pieces were inoculated with 1ml of a suspension of Aspergillus niger spores (the number of spores contained: $10^4$/ml), and were thereafter allow to stand in constant temperature box at 25deg.C and at a relative humidity of 90% for 24 hours.

The above test pieces were placed on eumycetes agar media (GP media), with the sheet surfaces with the spore suspension facing down, and were left in constant temperature box at 25deg.C and at a relative humidity of 90% for three days. Then, hyhae formation was observed.

The hyhae formation was evaluated by the following criteria.

Evaluation 0 ... No hyhae formation was detected in parts of the test piece inoculated with the spore suspension.

Evaluation 1 ... Hyhae formation was detected in an area not exceeding 1/3 of the area of the test piece inoculated with the spore suspension.

Evaluation 2 ... Hyhae formation was detected in an area 1/3 or more of the area of the test piece inoculated with the spore suspension.

Evaluation 3 ... Hyhae formation in high concentration was detected in the entire area of the test piece inoculated with the spore suspension.

These test results are shown in Table 1.

The test results in Table 1 show that the activated carbon impregnated with silver in the comparative examples, though containing very small quantities of silver, allow considerable quantities of silver elution, whereas the water purifying materials of the present invention, despite the large quantities of silver content, allow very little silver elution. Considering also the results of mold formation, it is seen that the water purifying materials of the present invention have a remarkably high degree of antibacterial activity. Furthermore, the water purifying materials of the present invention have excellent water purifying functions including removal of free chlorine.

[2] (Embodiments 7 and 8; Comparative Examples 4 and 5)

Water purification experiment was conducted on a laboratory scale, using water purifying materials of the present invention having zeolite bonded with silver (Embodiment 7) or zirconium phosphate having silver bonded thereto (Embodiment 8), and for comparison, water purifying materials used heretofore and having silver-impregnated activated carbon (Comparative Example 5) or having only activated carbon (Comparative Example 4). The water purifying materials have compositions as shown in Table 2, which were prepared by adding granular coconut husk activated carbon at 80% to 20% of the water purifying materials of the present invention having antibacterial activity and conventional silver-impregnated activated carbon and mixing them uniformly.

The water purifying materials were filled into columns, and air bubbles were removed by thorough backwashing. Thereafter, tap water was used as raw water to flow under the following conditions continuously for 90 days. The numbers of bacterial colonies formed in purified water were measured along with the number of days having passed. Table 3 shows the numbers of bacterial colonies formed in the purified water in Embodiments 7 and 8 and Comparative Examples 4 and 5.

The numbers of bacterial colonies were measured, using standard agar media, after cultivating them at 36 deg.C for 48 hours.

Experiment conditions:

columns used: 40mmø X 600mmH
filling quantity: 370cc
filtration speed: 22.5m/m$^2$ • Hr

[3] (Embodiment 9; Comparative Example 6)

The water purifying material used in Embodiment 7, as a water purifying material of the present invention (Embodiment 9), and for comparison, the water purifying material used in Comparative Example 5, as a conventional water purifying material having silver-impregnated activated carbon (Comparative Example 6), were filled into activated carbon towers of an industrial scale. Tap water was used as raw water to flow under the following conditions for 6 months. The numbers of bacterial colonies formed in purified water were measured along with the processing periods. Table 4 shows compositions of the water purifying materials and sterilizing conditions of the activated carbon tower.

Test conditions:

dimensions of activated carbon towers: 1,400mmø X 1,500mmH
filling height: about 1,040mmH
filling quantity: about 1,600l
filtration speed: about 22.5m/m$^2$ • Hr
filtration flow rate: 34-35m$^3$/Hr

The activated carbon tower filled with silver-impregnated activated carbon was periodically heat-sterilized by circulating heated water at 95degC. However, the above step was not taken for the water purifying material of the present invention.

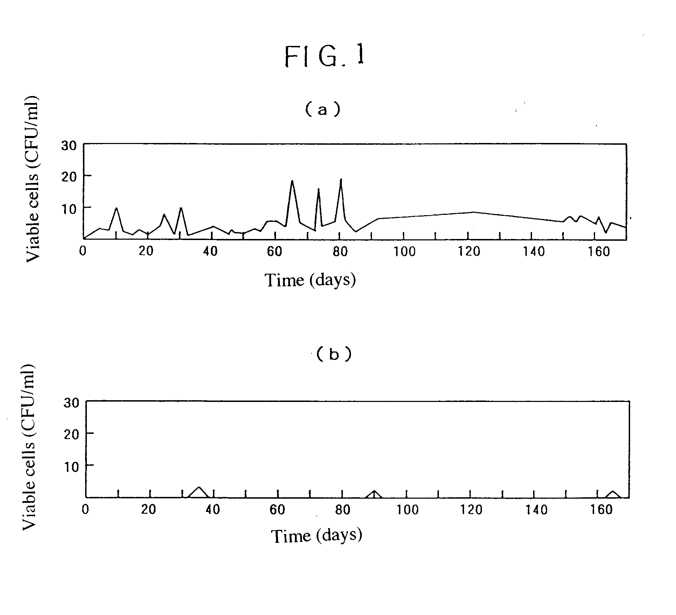

Figs. 1 (a) and (b) show the relationship between period of water flow and the number of bacterial colonies formed in the purified water in Comparative Example 6 and Embodiment 9, respectively. The viable cell counts of bacteria in the purified water were determined by sampling during running of the activated carbon towers, opening sampling cocks after draining purified water 10l having passed through the activated carbon towers, and based on measurment of the numbers of colonies formed in standard agar media after cultivating them at 36 deg.C for 48 hours.

[Table 1]

|  | silver content (%) | silver elution (ppb) | free chlorine (ppm) | evalution of mold gen. |
|---|---|---|---|---|
| Emb. 1 | 0.002 | up to 0.5 | 0.0015 | 1 |
| Emb. 2 | 0.05 | 1.0 | 0.0017 | 0 |
| Emb. 3 | 0.29 | 2.0 | 0.0019 | 0 |
| Emb. 4 | 0.80 | 5.0 | 0.0020 | 0 |
| Emb. 5 | 1.2 | 8.0 | 0.0022 | 0 |
| Emb. 6 | 3.5 | 18.0 | 0.0028 | 0 |
| Comp 1 | 0.009 | 20.2 | 0.0019 | 2 |
| Comp 2 | 0.071 | 36.0 | 0.0020 | 2 |
| Comp 3 | --- | --- | 0.0019 | 3 |

[Table 2]

|  | Comp. 4 | Emb. 7 | Emb. 8 | Comp 5 |
|---|---|---|---|---|
| activated carbon | 370ml | 296ml | 296ml | 296ml |
| silver-bonded zeolite |  | 74ml |  |  |
| zirconium phophate having silver |  |  | 74ml |  |
| silver-impregnated activated carbon |  |  |  | 74ml |
| filling quantity | 370ml | 370ml | 370ml | 370ml |
| silver content of entire purified water | --- | 0.44% | 0.44% | 0.5% |

[Table 3]

| day passed | raw water (tap water) | Comp. 4 | Emb. 7 | Emb. 8 | Comp. 5 |
|---|---|---|---|---|---|
| Day 1 | ND | $1.2 \times 10^2$ | ND | ND | 7 |
| Day 2 | ND | $1.1 \times 10^3$ | ND | 4 | 2 |
| Day 4 | ND | $1.8 \times 10^4$ | ND | ND | ND |
| Day 6 | ND | $1.9 \times 10^4$ | ND | ND | ND |
| Day 8 | ND | $6.9 \times 10^3$ | ND | 2 | ND |
| Day 10 | ND | $4.7 \times 10^3$ | ND | ND | $5.2 \times 10^2$ |
| Day 20 | ND | $4.9 \times 10^3$ | ND | ND | $8.8 \times 10^2$ |
| Day 30 | ND | $2.8 \times 10^3$ | ND | ND | $7.1 \times 10^2$ |
| Day 60 | ND | $5.9 \times 10^3$ | ND | ND | $4.3 \times 10^2$ |
| Day 90 | ND | $2.1 \times 10^4$ | ND | ND | $9.1 \times 10^2$ |
| ND: Not Detected (unit: CFU./ml) | | | | | |

[Table 4]

| | Comp. 6 | Emb. 9 |
|---|---|---|
| activated carbon | 1600 l | 1280 l |
| silver-bonded zeolite | --- | 320 l |
| sterilizing conditions | hot water at 95deg.C circulation for 4 hours | --- |
| sterilizing frequency | once in 2 days | --- |

The results in Figs. 1(a) and (b) show that, in the activated carbon tower filled with the silver-impregnated activated carbon which had been used heretofore as a water purifying material, the number of colonies reached 2 to 20/ml despite the frequent heat sterilization treatment, whereas colonies were hardly detected during the treatment in the purified water of the activated carbon tower filled with the water purifying material of the present invention. Free Ag ions varied in the range of 0.5-3 ppb.

It is seen from the above results that the water purifying material of the present invention has a markedly higher antibacterial activity than the conventional silver-impregnated activated carbon, and produces an outstanding effect particularly when used in a large water purifying apparatus of industrial scale for a long period of time.

An embodiment of water purifying system will be shown hereinafter.

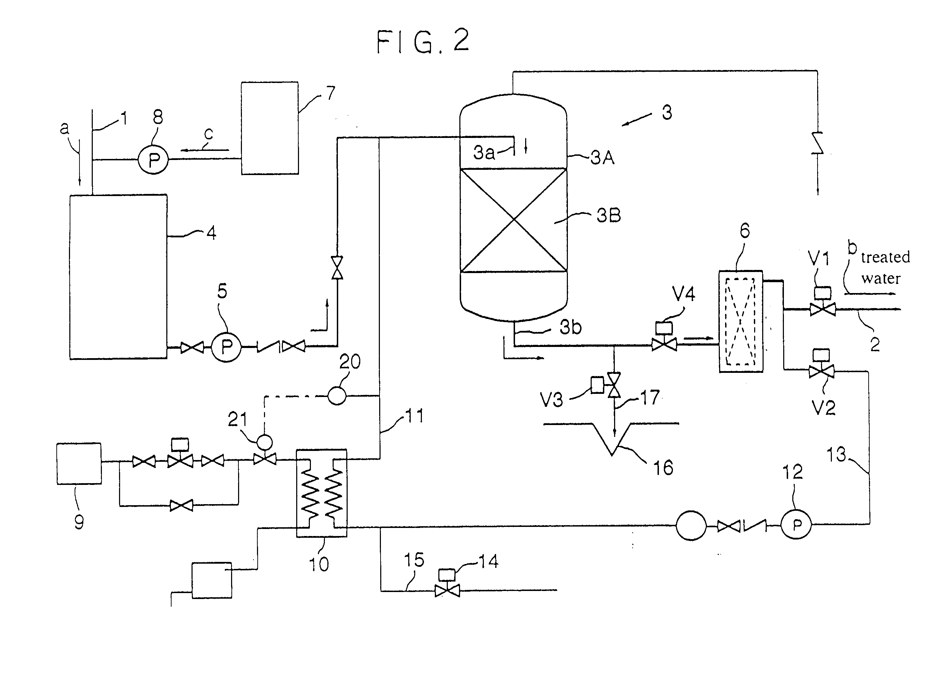

As shown in Fig. 2 - Fig. 4, this water purifying system includes an activated carbon filtration tower 3 for adsorbing and removing free chlorine and organic matters in raw water a supplied from a raw water supply line 1, and delivering treated water b to a treated water takeout line 2; a free chlorine injecting device for injecting free chlorine into the raw water supply line 1; and an activated carbon regenerating device.

The raw water supply line 1 includes a raw water storage tank 4, and a water supply pump 5 for taking raw water a out of the raw water storage tank 4 and supplying it to the activated carbon filtration tower 3.

The treated water takeout line 2 includes an activated carbon trap filter 6 for removing activated carbon from the treated water.

The activated carbon filtration tower 3 has a tower 3A in which an activated carbon filtration layer 3B filled with granular activated carbon is placed to filter all quantity of water flowing in through an upper tower entrance 3a and down to a tower exit 3b in the bottom. This is the type that pressurizes raw water a, and passes it through the activated carbon filtration layer 3B.

The activated carbon filtration layer 3B is formed by filling activated carbon into the tower 3A. A granular water purifying material is dispersed and mixed in this activated carbon filtration layer 3B. This water purifying material has the antibacterial property shown in the above embodiments of water purifying material and manufacturing method therefor.

That is, this water purifying material has, as its components, zeolite with silver ions bonded to ion exchange groups through an ion exchange reaction (hereinafter called silver zeolite) and activated carbon. More specifically, silver zeolite and a carbonaceous material are mixed and crushed, and then a binder and, if necessary, an admixture are added thereto and mixed. Subsequently, the mixture is granulated. The pellets are oxidized in an atmosphere including oxygen at 300deg.C or below, dry-distilled and carbonized in an inert gas, and thereafter activated in a hot activating atmosphere.

The carbonaceous material is coconut husk, wood, coal or the like. The binder is petroleum pitch, coal tar or the like. The admixture is water and heavy oil, or the like.

The atmosphere including oxygen is air, a gaseous mixture of oxygen and nitrogen, a gas including oxygen in water vapor or carbon dioxide, or the like. Through the oxidation in the atmosphere including oxygen, the pellets have oxygen atoms bonded to surfaces of the carbonaceous material.

The inert gas is a gas inactive to the carbonaceous material in the dry-distilling temperature range of 600 - 650deg.C which can fully carbonize the pellets. Specifically, nitrogen gas or a nitrogen gas including a small quantity of carbon dioxide. Through the dry-distilling and carbonization treatment in this inert gas, the binder and admixture also become carbonaceous.

The activating atmosphere is water vapor, carbon dioxide, a gaseous mixture of the two, or the like.

The antibacterial water purifying material has silver mixed thereinto, such that the quantity of silver contained in the activated carbon filtration tank 3B is 0.01-3.00% of the total quantity of activated carbon which is a sum of the activated carbon filled into the activated carbon filtration tower 3 to form the activated carbon filtration layer 3B and the activated carbon contained in the antibacterial water purifying material. The reason for setting the quantity of silver to the range of 0.01-3.00% is that a quantity less than 0.01% would not exhibit a desired antibacterial ability, and a quantity greater than 3.00% would not result in improved antibacterial ability and hence uneconomical.

The antibacterial water purifying material manufactured as above, as will be clear from experiment described later, hardly allows silver ions to elute into water, thereby exhibiting antibacterial abiltiy semipermanently. In other words, maintenance such as changing the antibacterial water purifying material is unnecessary to maintain the antibacterial ability.

The free chlorine injecting device includes a storage tank 7 for storing hypochlorous acid soda c, and a supply pump 8 acting as means for taking hypochlorous acid soda c out of the storage tank 7 and supplying it to the raw water supply line 1 upstream of the raw water storage tank 4.

Raw water a into which hypochlorous acid soda c has been injected is caused to remain in the raw water storage tank 4 for a predetermined time, whereby a side reaction takes place in which hypochlorous acid soda c injected for sterilization reacts with organic matters in raw water a to change part of the organic matters into organic chlorine compounds. That is, the residual time in the raw water storage tank 4 is set to a sufficient time for the organic matters in raw water a to react with hypochlorous acid soda c whereby part thereof change into organic chlorine compounds. The supply pump 8 supplies hypochlorous acid soda c to maintain a concentration of free chlorine ($Cl_2$) at the entrance 3a of activated carbon filtration tower 3 at least to a set value (a value required to prevent propagation of viable cells in the raw water supply line 1, which generally is 0.3ppm).

The activated carbon regenerating device is a device for supplying hot water to the activated carbon filtration layer 3B to regenerate the activated carbon, i.e. a device restoring the adsorbing ability of the activated carbon. The activated carbon regenerating device includes a heat changer 10 for heating water through a heat change with steam from a boiler 9; a hot water feed line 11 for supplying hot water heated by the heat exchanger 10 to the raw water supply line 1 adjacent the tower entrance 3a; a hot water return line 13 with a circulation pump 12 for taking water out of the treated water takeout line 2 downstream of the activated carbon trap filter 6 and supplying the water taken out as water to be heated to the heat exchanger 10, such that a circulating line is formed with the hot water feed line 11, part of the raw water supply line 1 and part of the treated water takeout line 2 for circulating water between the heat exchanger 10 and activated carbon filtration tower 3; a water supply line 15 with a water supply valve 14 for supplying water to the hot water return line 13; and a drain line 17 for connecting a position of the treated water takeout line 2 upstream of the activated carbon trap filter 6 to a drain section 16. Further, the activated carbon regenerating device includes a line switching device; a temperature sensor 20 for detecting a hot water temperature in the hot water feed line 11; a temperature adjusting valve 21 operable based on a result of detection by the temperature sensor 20 for automatically adjusting a quantity of steam supplied to the heat exchanger 10 to make the hot water become a set temperature Th; and an operating state switching device.

The line switching device includes a first switch valve V1 mounted on the treated water takeout line 2 downstream of a connection thereof to the hot water return line 13; a second switch valve V2 mounted adjacent an intake end of the hot water return line 13; a third switch valve V3 mounted on the drain line 17; and a fourth switch valve V4 mounted on the treated water takeout line 2 upstream of the activated carbon trap filter 6 and downstream of a connection to the drain line 17.

The operating state switching device is a device for controlling the boiler 9, the circulation pump 12 acting as a circulating device, and the line switching device, to switch the operating state of the activated carbon regenerating device among three states, i.e. an inoperative state for enabling water treatment, a hot water circulating and regenerating state, and a raw water cleaning state.

In the inoperative state, as shown in Fig. 2, the boiler 9 and circulation pump 12 are stopped, the first switch valve V1 and fourth switch valve V4 are opened, and the second switch valve V2 and third switch valve V3 are closed. This state enables raw water to be supplied to the activated carbon filtration tower 3 through the raw water supply line 1, and treated water to be taken out of the activated carbon filtration tower 3 through the treated water takeout line 2. That is, this state enables water treatment.

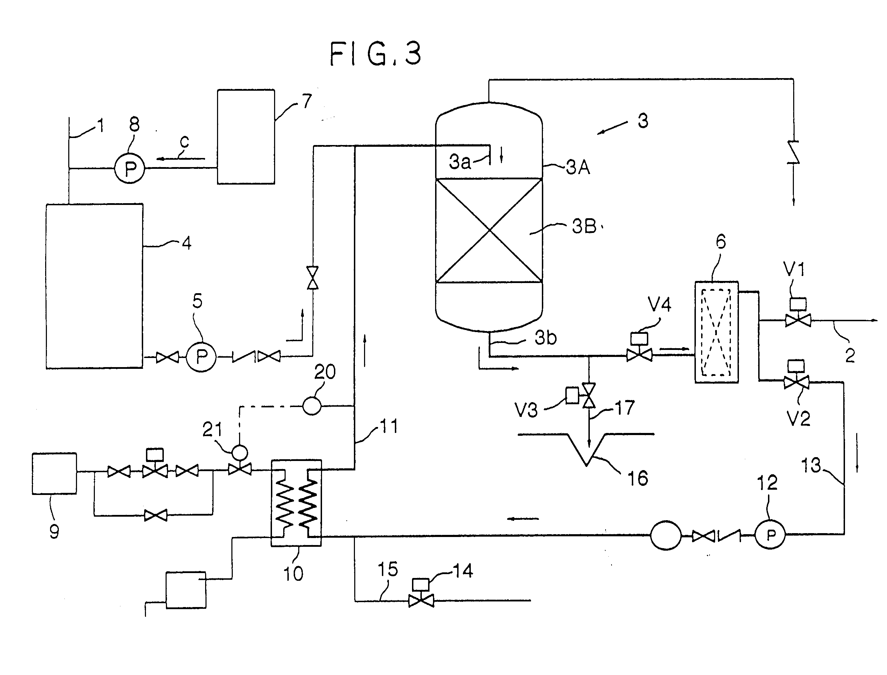

In the hot water circulatiing and regenerating state, as shown in Fig. 3, the boiler 9 and circulation pump 12 are driven, the second switch valve V2 and fourth switch valve V4 are opened, and the first switch valve V1 and third switch valve V3 are closed. Thus, this is a state for heat-recovering (regenerating) the adsorbing ability of the activated carbon by circulating hot water heated by the heat exchanger 10, through the hot water feed line 11, a downstream portion of raw water supply line 1, the tower entrance 3a, activated carbon filtration layer 3B, tower exit 3b, fourth switch valve V4, activated carbon trap filter 6, second switch valve V2, circulation pump 12, hot water return line 13 and heat exchanger 10 in the stated order. That is, this is a state for causing elution of organic chlorine compounds adsorbed to the surfaces of the activated carbon of the activated carbon filtration layer 3B.

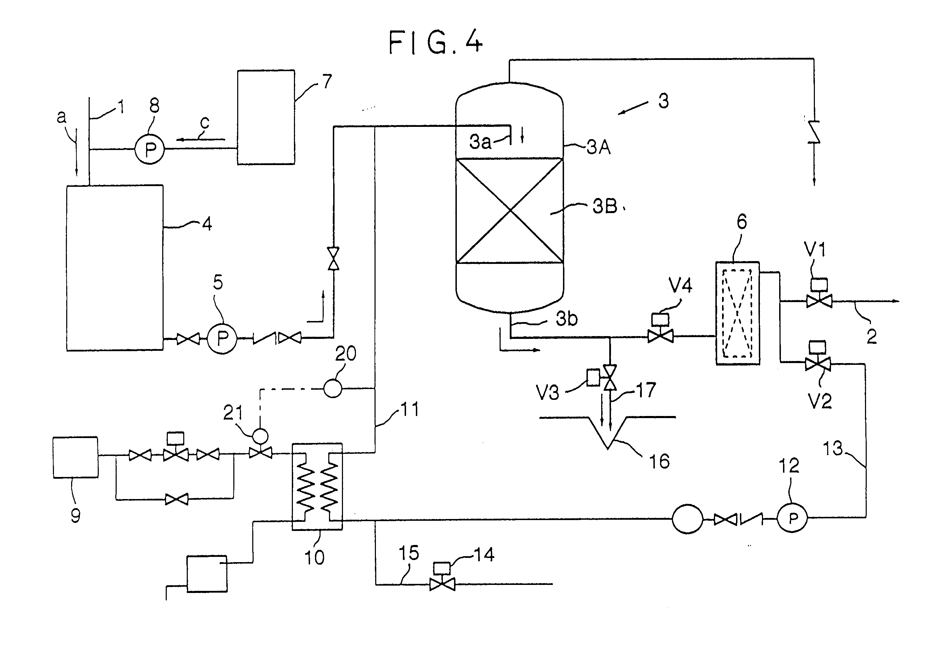

In the raw water cleaning state, as shown in Fig. 4, the water supply pump 5 is driven, the circulation pump 12 and boiler 9 are stopped, the third switch valve V3 is opened, and the fourth switch valve V4 is closed. Thus, this is a state for causing raw water a to flow through the raw water supply line 1, tower entrance 3a, activated carbon filtration layer 3B, tower exit 3b, an upstream portion of treated water takeout line 2, third switch valve V3 and drain line 17 in the stated order, to be exhausted to the drain section 16. That is, this is a state for cleaning the activated carbon filtration layer 3B with raw water a.

The adjustment of hot water temperature by the temperature adjustment valve 21 is carried out in the hot water circulating and regenerating state. The set temperature Th at that time is a temperature for enabling elution of organic chlorine compounds of low boiling point adsorbed by the activated carbon. It is 80deg.C or higher, preferably, 100deg.C.

A method of driving the activated carbon regenerating device will be described next.

⟨1⟩ When the activated carbon surfaces in activated carbon filtration layer 3B become saturated with organic chlorine compounds in the course of water treatment in the inoperative state, switching is made to the hot water circulating and regenerating state, stopping the water treatment through the activated carbon filtration tower 3, i.e. water treatment for raw water a supplied to the activated carbon filtration tower 3. The time of reaching saturation with organic chlorine compounds is variable with the size of activated carbon filtration layer 3B (the quantity of activated carbon) and the quantity of treated water, and the quantity of organic matters contained in raw water. It is approximately 20 to 30 days where the activated carbon is coconut husk granular activated carbon used for usual water treatment, whose quantity is in the order of 2,000 lit., and the raw water supply is 20m$^3$ per hour.

⟨2⟩ The hot water circulating and regenerating state is continued for a predetermined time, and switching is made to the raw water cleaning state upon elution of all of the organic chlorine compounds adsorbed by the activated carbon. That is, the predetermined time is a sufficient time for elution of free chlorine compounds. Specifically, where set temperature Th is 90deg.C, it is approximately 30-60 min. after warm water is heated to 90deg.C. with commencement of the operation.

⟨3⟩ Switching is made to the inoperative state after the raw water cleaning state is continued for a predetermined time. The predetermined time is approximately 5-10 min.

Water treatment carried out as follows while the activated carbon regenerating device is stopped.

The free chlorine injecting device injects hypochlorous acid soda c into raw water a, so that free chlorine ($Cl_2$) reaches at least a predetermined value at the tower entrance 3a. Raw water a injected with hypochlorous acid soda c maintained in the raw water storage tank 4 for a predetermined time, to cause a reaction between the organic matters in raw water a and hypochlorous acid soda c, thereby changing the organic matters into organic chlorine compounds of low boiling point. Then, the organic matters in raw water a are adsorbed by the activated carbon as organic chlorine compounds and, as a result, eluted from the activated carbon with water heating by the activated carbon regenerating device, to regenerate the activated carbon.

The experiment carried out by Inventors will be described next.

[Specifications of Experiment Equipment]

The specifications of the activated carbon filtration tower used are as follows:
type: pressurized downflow type
dimensions: 1,450mm⌀ X 1,800mmH
processing capacity: 20m$^3$/Hr (time)
quantity of activated carbon filled: 2,000 lit.
height of activated carbon filled: 1,200mmH.

As activated carbon filtration layers for the activated carbon filtration tower of the above specifications, an activated carbon filtration tower of the present invention was prepared employing 400 lit. of a granular antibacterial water purifying material having silver zeolite and activated carbon as components thereof and uniformly dispersed in 1600 lit. of water treating coconut husk granular activated carbon, and a conventional activated carbon filtration tower was prepared employing 2,000 lit. of coconut husk granular activated carbon. The antibacterial water purifying material was manufactured with the method described, using coconut husk as the carbonaceous material, which contains silver zeolite at about 20%.

The activated carbon filtration tower of the present invention used an antibacterial water purifying material granulated to be uniformly dispersed only by usual backwashing of the activated carbon filtration layer. Table 5 shows performance and size distribution of the antibacterial water purifying material and water treating coconut husk granular activated carbon. The performance and size distribution of activated carbon were determined by a testing method based on JIS Standard K1474 and the like.

《Experiment Example 1》

〈Object of Experiment〉

For the activated carbon water treating equipment of the present invention, to confirm that treated water is sterilized without requiring maintenance.

[Table 5]

|  |  | antibacterial water purifying material | coconut husk gramular activated carbon |
|---|---|---|---|
| filling rate (g/ml) |  | 0.530 | 0.480 |
| ash (%) |  | 14.2 | 0.38 |
| pH |  | 9.25 | 5.61 |
| conductivity (μs/cm) |  | 48.8 | 35.5 |
| $C_6H_6$ (%) |  | 20.3 | 38.1 |
| $I_2$ (mg/g) |  | 900 | 1168 |
| hardness (%) |  | 93.6 | 98.5 |
| size distribution (%) unit: new JIS mesh | less than 8.6 | --- | 0.5% |
|  | 8.6 to 10 | --- | 3.8% |
|  | 10 to 12 | 1.0% | 10.8% |
|  | 12 to 14 | 16.0% | 14.1% |
|  | 14 to 16 | 23.0% | 12.0% |
|  | 16 to 18 | 21.3% | 13.7% |
|  | 18 to 22 | 17.8% | 15.6% |
|  | 22 to 26 | 17.4% | 13.0% |
|  | 26 to 30 | 17.4% | 12.6% |
|  | 30 to 36 | 3.0% | 3.4% |
|  | more than 36 | 0.5% | 0.5% |

⟨Method of Experiment⟩

A 10 % solution of hypochlorous acid soda was injected at 400 to 500cc/Hr to the quantity of raw water inflow at 40m³/Hr at the inlet side of raw water storage tank 4, and to maintain the concentration of free chlorine ($Cl_2$) at least at 0.3ppm at the outlet side of water supply pump 5. The raw water was caused to remain in the raw water storage tank 4 for approximately two hours, and was supplied through the water supply pump 5 at a flow rate of 20m³/Hr to the activated carbon filtration tower.

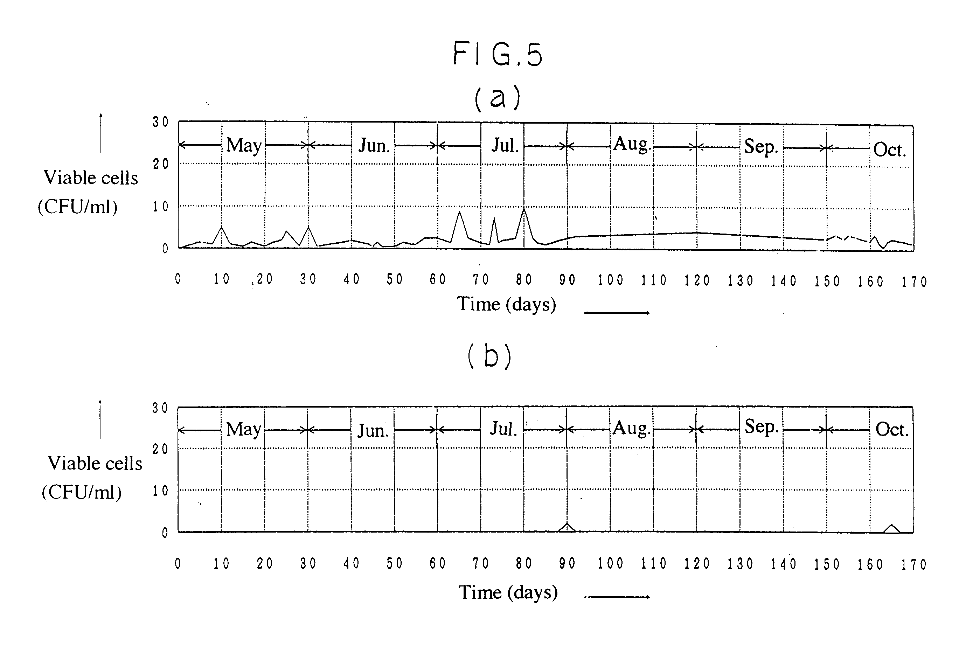

For the conventional activated carbon filtration tower, filtration treatment was conducted while effecting heat-sterilization twice or three times a week. For the activated carbon filtration tower of the present invention, filtration treatment was conducted while heat-sterilizing the activated carbon every 30 days by circulating hot water at 90deg.C for about 60 minutes. Viable cell counts of bacteria in treated water (filtered water) were checked periodically. The checking of viable cell counts was made by opening a sampling cock during operation (water treatment) of the activated carbon filtration tower, sampling water after draining approximately 10 lit., cultivating the samples on standard agar media at 36deg.C for 48 hours, and measuring the number of colonies formed on the media. Of the relationships between passage of time (number of days) and viable cell count obtained, Fig. 5 (a) shows that obtained from use of the conventional activated carbon filtration tower, and Fig. 5 (b) shows that obtained from use of the activated carbon filtration tower of the present invention. Table 6 shows mean values of the viable cell counts for the respective months of one year. ND in Table 6 stands for not detected.

As is clear from the above, the treated water is sterilized reliably in the activated carbon filtration tower of the present invention, which has a great advantage in sterilization of treated water over the conventional activated carbon filtration tower.

[Table 6]

| division / month | method of invention | conventional method | | note |
|---|---|---|---|---|
| | mean viable cell count | mean viable cell count | heat-sterilizing frequency | |
| 1 | ND | ND | twice/week | (note) In the method of the invention, heat re-generation was effected once a month, at 90 degrees for 60 min. to elute organic chlorine compounds. |
| 2 | ND | ND | twice/week | |
| 3 | ND | ND | twice/week | |
| 4 | ND | ND | twice/week | |
| 5 | ND | 3 | three times/week | |
| 6 | ND | 3 | three times/week | |
| 7 | ND | 5 | three times/week | |
| 8 | ND | 4 | three times/week | |
| 9 | ND | 4 | three times/week | |
| 10 | ND | 4 | three times/week | |
| 11 | ND | 3 | three times/week | |
| 12 | ND | 1 | twice/week | |

《Experiment Example 2》

〈Object of Experiment〉

To confirm the effect of heat regeneraton of activated carbon, using chloroform as an index.

〈Method of Experiment〉

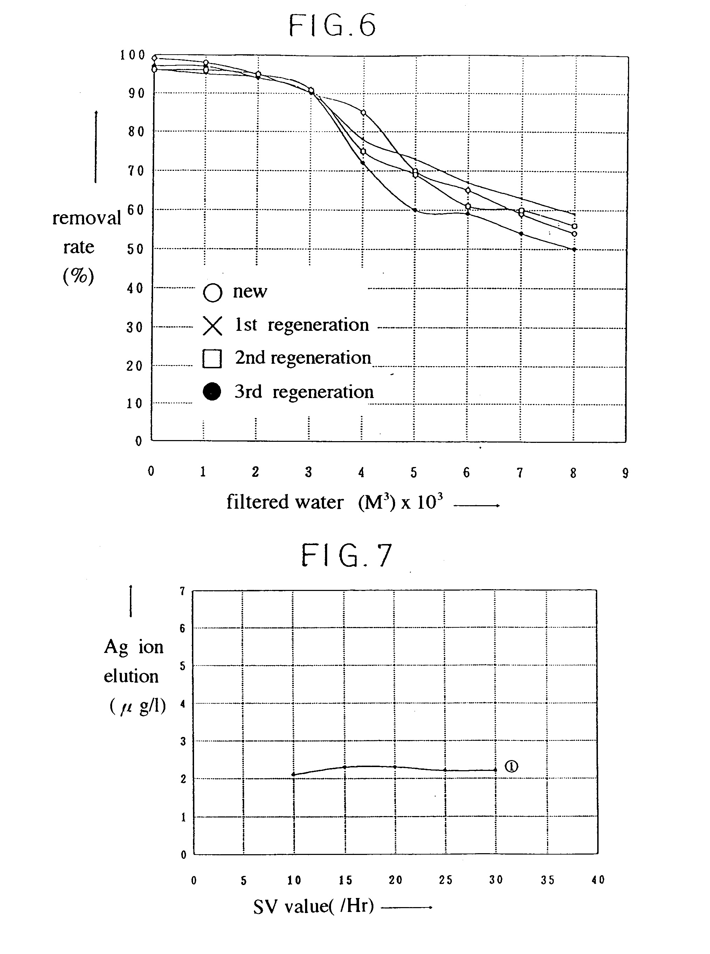

Heat regeneration was repeated each time the quantity of treated water (quantity of filtered water) reached 8,000m$^3$. Chloroform concentrations in raw water and treated water were examined when the quantity of treated water reached 1,000m$^3$ in each water treatment. The ratio of the chloroform concentration in treated water to the chloroform concentration in raw water, i.e. the rate of removal of chloroform, was determined. The results are shown in Fig. 6.

The heat regeneration was carried out by circulating hot water at a temperature of 90-95deg.C and a flow velocity (SV) of 4-3 through the activated carbon filtration layer for 40 minutes. Of the chloroform concentration in raw water, maximum concentration was 0.139ppm, minimum concentration 0.040ppm and mean concentration 0.096ppm.

It has been found that the activated carbon can be regenerated by periodically circulating hot water to the activated carbon filtration layer.

《Experiment Example 3》

〈Object of Experiment〉

To confirm maintenance performance of the antibacterial ability of silver zeolite, i.e. the antibacterial material.

〈Method of Experiment〉

A relationship between treating (filtering) flow velocity and elution of silver ions was examined by supplying raw water to the activated carbon filtration layer in the above activated carbon filtration tower of the present invention. The results are shown in Fig. 7.

A very small (neglible) quantity of silver ions eluted regardless of the level of SV. It has been found that the antibacterial ability can be maintained over a long period of time.

It has been found from the above experiment that, with activated carbon water treatment equipment designed to provide SV value in the range of 6-15, sterilization of treated water and removal of organic matters are realized steadily by driving the activated carbon regenerating device about once or twice a month to regenerate the activated carbon.

A different embodiment will be described.

The activated carbon regenerating device may be constituted as follows.

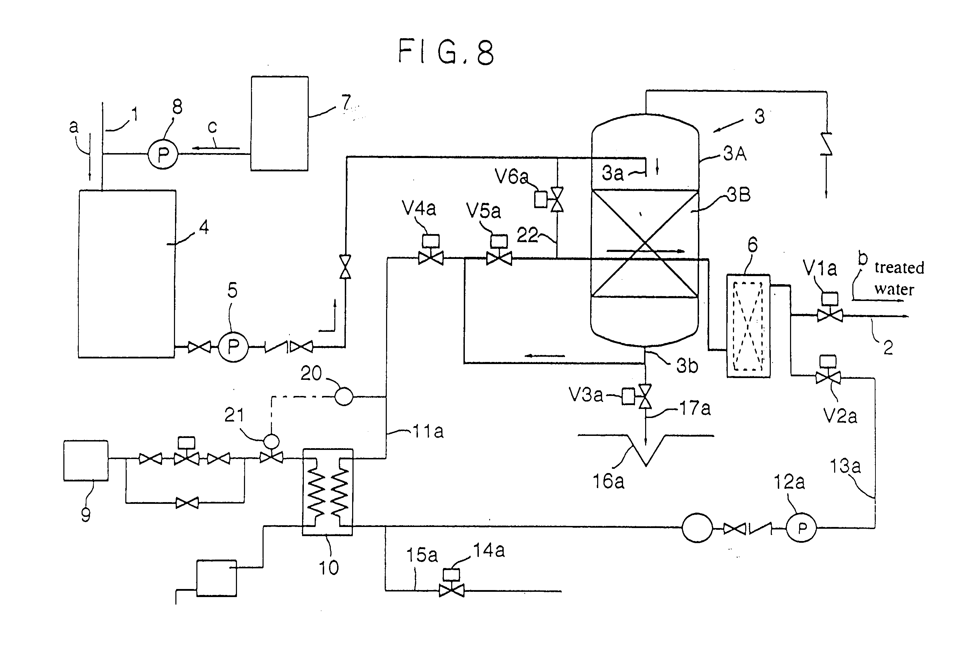

As shown in Fig. 8 - Fig. 10, a heat exchanger 10 similar to that in the embodiment is provided; with a hot water feed line 11a for supplying hot water heated by the heat exchanger 10 to the treated water takeout line 2 adjacent the tower exit 3b; a hot water return line 13a with a circulation pump 12a for taking water out of the treated water takeout line 2 downstream of the activated carbon trap filter 6 and supplying the water taken out as water to be heated to the heat exchanger 10, such that a circulating line is formed with the hot water feed line 11a, part of the raw water supply line 1 and part of the treated water takeout line 2 for circulating water between the heat exchanger 10 and activated carbon filtration tower 3; a water supply line 15a with a water supply valve 14a for supplying water to the hot water return line 13a; a drain line 17a for connecting a position of the treated water takeout line 2 upstream of the hot water feed line 11a to a drain section 16a; and a communicating line 22 for connecting a position of the treated water takeout line 2 downstream of the connection thereof to the hot water feed line 11a, to the raw water supply line 1. Further, a line switching device and an operating state switching device are provided.

The line switching device includes a first switch valve V1a mounted on the treated water takeout line 2 downstream of the connection thereof to the hot water return line 13a; a second switch valve V2a mounted adjacent an intake end of the hot water return line 13a; a third switch valve V3a mounted on the drain line 17a; a fourth switch valve V4a mounted adjacent the outlet end of hot water feed line 11a; a fifth switch valve V5a mounted on the treated water takeout line 2 between the connection thereof to the hot water feed line 11a and the connection thereof to the communicating line 22; and a sixth switch valve V6a mounted on the communicating line 22.

The operating state switching device is a device for controlling the boiler 9, the circulation pump 12a and the line switching device, to switch the operating state of the activated carbon regenerating device among three states, i.e. an inoperative state for enabling water treatment, a hot water circulating and regenerating state, and a raw water cleaning state.

In the inoperative state, as shown in Fig. 8, the boiler 9 and circulation pump 12a are stopped, the first switch valve V1a and fifth switch valve V5a are opened, and the second switch valve V2a, third switch valve V3a, fourth switch valve V4a and sixth switch valve V6a are closed. This state enables raw water to be supplied to the activated carbon filtration tower 3 through the raw water supply line 1, and treated water to be taken out of the activated carbon filtration tower 3 through the treated water takeout line 2. That is, this state enables water treatment.

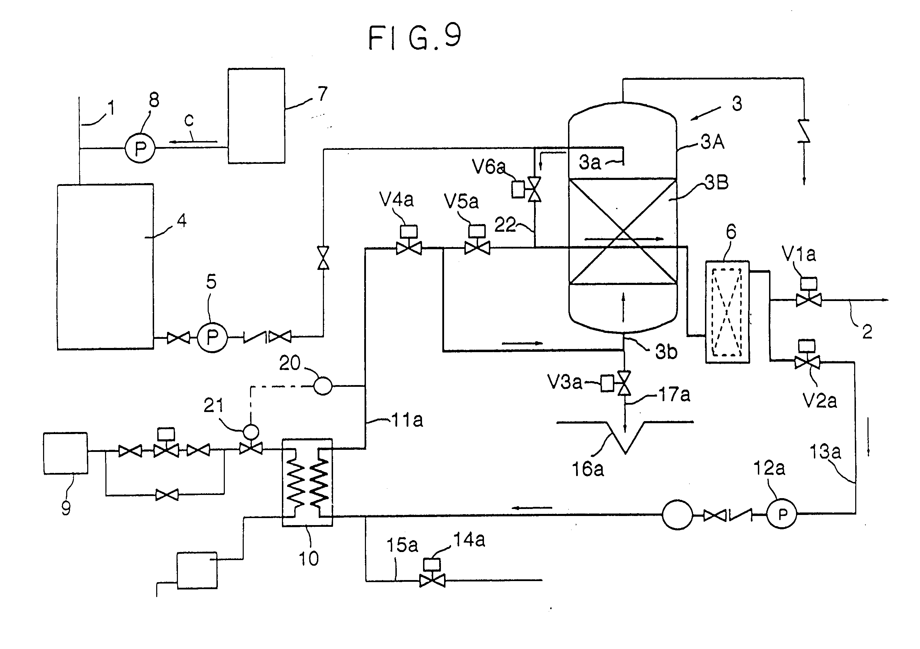

In the hot water circulatiing and regenerating state, as shown in Fig. 9, the boiler 9 and circulation pump 12 are driven, the second switch valve V2a, fourth switch valve V4a and sixth switch valve V6a are opened, and the first switch valve V1a, third switch valve V3a and fifth switch valve V5a are closed. Thus, this is a state for heat-recovering (regenerating) the adsorbing ability of the activated carbon by circulating hot water heated by the heat exchanger 10, through the hot water feed line 11a, an upstream portion of treated water takeout line 2, the tower exit 3b, activated carbon filtration layer 3B, tower entrance 3a, a downstream portion of raw water supply line 1, six switch valve V6a, activated carbon trap filter 6, second switch valve V2a, circulation pump 12a, hot water return line 13a and heat exchanger 10 in the stated order. That is, this is a state for causing elution of organic chlorine compounds adsorbed to the surfaces of the activated carbon of the activated carbon filtration layer 3B. The direction of flow through the activated carbon filtration layer 3B in this state is opposite to the direction of flow in water treatment in the inoperative state.

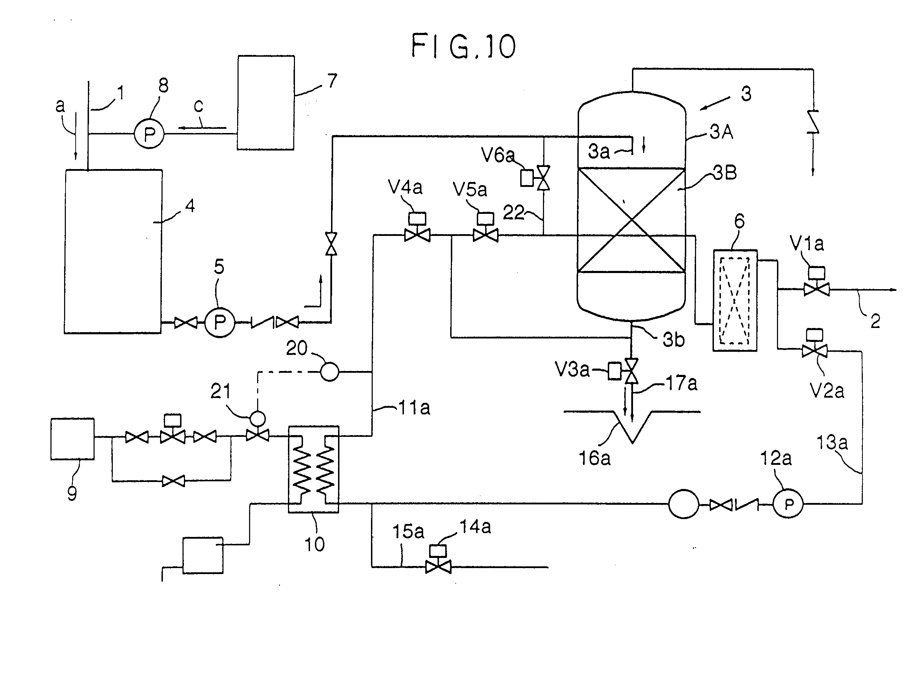

In the raw water cleaning state, as shown in Fig. 10, the water supply pump 5 is driven, the circulation pump 12a and boiler 9 are stopped, the third switch valve V3a is opened, and the remaining switch valves are closed. Thus, this is a state for causing raw water a to flow through the raw water supply line 1, tower entrance 3a, activated carbon filtration layer 3B, tower exit 3b, an upstream portion of treated water takeout line 2, third switch valve V3a and drain line 17 in the stated order, to be exhausted to the drain section 16. That is, this is a state for cleaning the activated carbon filtration layer 3B with raw water a.

The other aspects of this different embodiment are the same as in the foregoing embodiment, and like references are affixed to omit description thereof.

## Claims

1. A highly antibacterial water purifying material formed of zeolite having silver bonded thereto or a zirconium phosphate compound having silver bonded thereto, and activated carbon.

2. The highly antibacterial water purifying material of claim 1, wherein a content of the silver bonded to said zeolite or said zirconium phosphate compound is 0.01-3.00% of the entire water purifying material.

3. The highly antibacterial water purifying material of claim 1, wherein said zeolite having silver bonded thereto is a zeolite with silver ions bonded to ion exchange groups through an ion exchange reaction.

4. A method of manufacturing a highly antibacterial water purifying material, comprising mixing and crushing zeolite having silver bonded thereto or a zirconium phosphate compound having silver bonded thereto, and a carbonaceous material, adding and mixing a binder and, if necessary, an admixture, to form charcoal pellets or charcoal granules, oxidizing same in an atmosphere including oxygen at 300deg.C or below, dry-distilling and carbonizing same in an inert gas, and thereafter activating same.

5. The method of manufacturing a highly antibacterial water purifying material of claim 4, wherein said atmosphere including oxygen is one of air, a gaseous mixture of oxygen and nitrogen, and a gas including oxygen in water vapor or carbon dioxide.

6. The method of manufacturing a highly antibacterial water purifying material of claim 4, wherein the step of dry-distilling and carbonizing in an inert gas is a step of heating the pellets in nitrogen gas in a temperature range of 600 to 650deg.C.

7. The method of manufacturing a highly antibacterial water purifying material of claim 4, wherein the activating step is a step of heating the dry-distilled and carbonized pellets to a high temperature in an atmosphere of water vapor, carbon dioxide or a gaseous mixture thereof.

8. A water purifying system comprising an activated carbon filtration tower (3) for adsorbing and removing free chlorine and organic matters from raw water supplied from a raw water supply line (1), and delivering treated water to a treated water takeout line (2), and free chlorine injecting means for injecting free chlorine into said raw water supply line (1), wherein said activated carbon filtration tower (3) includes a water purifying material formed of zeolite having silver bonded thereto or a zirconium phosphate compound having silver bonded thereto, and activated carbon, dispersed in an activated carbon filtration layer (3b) mounted therein, and activated carbon regenerating means for supplying hot water to said activated carbon filtration layer (3b) to regenerate the activated carbon.

9. The water purifying system of claim 8, wherein content of the silver bonded to said zeolite or said zirconium phosphate compound is 0.01-3.00% of the entire water purifying material.

10. The water purifying system of claim 8, wherein said free chlorine injecting means includes a storage tank (7) for storing hypochlorous acid soda (c), and a supply pump (8) for taking said hypochlorous acid soda (c) out of the storage tank (7) and supplying it to said raw water supply line (1) upstream of the raw water storage tank (4).

11. The water purifying system of claim 8, wherein said activated carbon regenerating means is a device for supplying hot water to said activated carbon filtration layer (3B) to regenerate the activated carbon, and includes a heat changer (10) for making hot water, a hot water feed line (11) for supplying the hot water heated by the heat exchanger (10) to said raw water supply line (1), a hot water return line (13) for taking water out of the treated water takeout line (2) and supplying the water taken out as water to be heated to said heat exchanger (10), such that a circulating line is formed with the hot water feed line (11), part of said raw water supply line (1) and part of said treated water takeout line (2) for circulating water between said heat exchanger (10) and said activated carbon filtration tower (3), a water supply line (15) for supplying water to the hot water return line (13), a drain line (17), line switching means, a temperature sensor (20) for detecting a hot water temperature in said hot water feed line (11), a temperature adjusting valve (21) operable based on a result of detection by the temperature sensor (20) for automatically adjusting a quantity of steam supplied to the heat exchanger (10) to make the hot water become a set temperature (Th), and operating state switching means.

12. The water purifying system of claim 11, wherein said line switching means includes a first switch valve (V1) mounted on said treated water takeout line (2) downstream of a connection thereof to said hot water return line (13), a second switch valve (V2) mounted adjacent an intake end of said hot water return line (13), a third switch valve (V3) mounted on said drain line (17), and a fourth switch valve (V4) mounted on said treated water takeout line (2) upstream of the activated carbon trap filter (6) and downstream of a connection to the drain line (17).

13. The water purifying system of claim 11, wherein said operating state switching means includes a boiler (9) and circulating means (12) for supplying steam to said heat exchanger (10), and said line switching means, to switch the operating state of said activated carbon regenerating means among three states, i.e. an inoperative state for enabling water treatment, a hot water circulating and regenerating state, and a raw water cleaning state.

14. The water purifying system of claim 8, wherein said activated carbon regenerating means includes a heat changer (10) for making hot water, a hot water feed line (11a) for supplying the hot water heated by the heat exchanger (10) to said raw water supply line (1), a hot water return line (13a) for taking water out of the treated water takeout line (2) and supplying the water taken out as water to be heated to said heat exchanger (10), such that a circulating line is formed with the hot water feed line (11a), part of said raw water supply line (1) and part of said treated water takeout line (2) for circulating water between said heat exchanger (10) and said activated carbon filtration tower (3), a water supply line (15a) for supplying water to the hot water return line (13a), a drain line (17a), a communicating line (22) for connecting a position of said treated water takeout line (2) downstream of the connection thereof to the hot water feed line (11a), to said raw water supply line (1), line switching means, and operating state switching means.

**15.** The water purifying system of claim 14, wherein said line switching means includes a first switch valve (V1a) mounted on said treated water takeout line (2) downstream of a connection thereof to said hot water return line (13a), a second switch valve (V2a) mounted adjacent an intake end of said hot water return line (13a), a third switch valve (V3a) mounted on said drain line (17), a fourth switch valve (V4a) mounted adjacent the outlet end of said hot water feed line (11a), a fifth switch valve (V5a) mounted on said treated water takeout line (2) between the connection thereof to said hot water feed line (11a) and the connection thereof to the communicating line (22), and a sixth switch valve (V6a) mounted on said communicating line (22).

**16.** The water purifying system of claim 14, wherein said operating state switching means includes a boiler (9) and circulating means (12) for supplying steam to said heat exchanger (10), and said line switching means, to switch the operating state of said activated carbon regenerating means among three states, i.e. an inoperative state for enabling water treatment, a hot water circulating and regenerating state, and a raw water cleaning state.

**Amended claims**

**1.** (amended) A highly antibacterial water purifying material having, as two main components thereof, zeolite having silver bonded thereto or a zirconium phosphate compound having silver bonded thereto, and activated carbon, which is obtained by pelletizing a mixture of zeolite having silver bonded thereto or a zirconium phosphate compound having silver bonded thereto, raw material carbon powder and a binder, granulating and oxidizing the pellets, thereafter dry-distilling and carbonizing the granules in an inert gas, and then heating and activating the granules to activate and carbonize both the raw material carbon powder and the binder.

**2.** The highly antibacterial water purifying material of claim 1, wherein content of the silver bonded to said zeolite or said zirconium phosphate compound is 0.01-3.00% of the entire water purifying material.

**3.** The highly antibacterial water purifying material of claim 1, wherein said zeolite having silver bonded thereto is zeolite zeolite with silver ions bonded to ion exchange groups through an ion exchange reaction.

**4.** (amended) A method of manufacturing a highly antibacterial water purifying material having, as two main components thereof, zeolite having silver bonded thereto or a zirconium phosphate compound having silver bonded thereto, and activated carbon, comprising mixing and crushing zeolite having silver bonded thereto or a zirconium phosphate compound having silver bonded thereto, and raw material carbon powder, adding and mixing a binder and, if necessary, an admixture, to form charcoal pellets or charcoal granules, oxidizing same in an atmosphere including oxygen at 300deg.C or below, dry-distilling and carbonizing same in an inert gas, and thereafter heating and activating same to activate and carbonize both the raw material carbon powder and the binder.

**5.** The method of manufacturing a highly antibacterial water purifying material of claim 4, wherein said atmosphere including oxygen is one of air, a gaseous mixture of oxygen and nitrogen, and a gas including oxygen in water vapor or carbon dioxide.

**6.** The method of manufacturing a highly antibacterial water purifying material of claim 4, wherein the step of dry-distilling and carbonizing in an inert gas is a step of heating the pellets in nitrogen gas in a temperature range of 600 to 650deg.C.

**7.** The method of manufacturing a highly antibacterial water purifying material of claim 4, wherein the activating step is a step of heating the dry-distilled and carbonized pellets to a high temperature in an atmosphere of water vapor, carbon dioxide or a gaseous mixture thereof.

**8.** A water purifying system comprising an activated carbon filtration tower (3) for adsorbing and removing free chlorine and organic matters from raw water supplied from a raw water supply line (1), and delivering treated water to a treated water takeout line (2), and free chlorine injecting means for injecting free chlorine into said raw water supply line (1), wherein said activated carbon filtration tower (3) ... an activated carbon filtration layer

**Brief statement of amendment under article 19(1)**

Claim 1 now clearly recites that the water purifying material of the present invention is in substance formed of two components, i.e. zeolite having silver bonded thereto or a zirconium phosphate compound having silver bonded thereto, and activated carbon, which are baked into an integral granular form.

Cited references JP, A, 4-22410, JP, A, 4-247233 and JP, A, 63-239205 all disclose water purifying materials which are formed by using binders and in which the binders remain intact. Reference JP, A, 1-278408 shows a water purifying material having a simple mixture of zeolite holding silver or other metal ions and activated carbon, contained in nonwoven fabric.

The water purifying material of the present invention, assuming the quantity used is the same, has the greater treating ability for the absence of a binder. It has no brittleness of a simple mixture of zeolite holding silver or other metal ions and activated carbon, and does not become fine powder.

Claim 4 now clearly recites that the method of manufacturing the water purifying material defined claim 1 turns also a binder into activated carbon.

Reference JP, A, 63-239205 forms zeolite holding metal ions and activated carbon into a complex object by using a thermally fusible fiber and, if necessary, a binder. These thermally fusible fiber and binder remain intact.

The present invention provides a method of manuracturing a water purifying material which, assuming the quantity used is the same, has the greater treating ability for the absence of a binder. It has no brittleness of a simple mixture of zeolite holding silver or other metal ions and activated carbon, and does not become fine powder.

References 5-7 are cited against claims 8-16. The charactering feature of the present invention lies in the free chlorine injecting means for injecting free chlorine into the raw water supply line to sterilize raw water. This feature is neither disclosed nor suggested in the above references.

The inventions in references 5-7 disclose water purifiers, all small purifiers for household use, having a function only to remove halogenated hydrocarbons such as chloroform adsorbed by activated carbon by passing hot water.

The present invention provides an industrial water purifying apparatus for treating a large quantity of raw water. The invention is different from the references.

# FIG. 1

## ( a )

## ( b )

# FIG. 2

# FIG. 3

EP 0 684 210 A1

FIG.4

# FIG.5

## (a)

## (b)

EP 0 684 210 A1

# FIG.6

removal rate (%)

filtered water (M³) x 10³ ⟶

○ new
× 1st regeneration
□ 2nd regeneration
● 3rd regeneration

# FIG.7

Ag ion elution (μ g/l)

SV value( /Hr) ⟶

# FIG. 8

EP 0 684 210 A1

FIG.9

FIG.10

EP 0 684 210 A1

## INTERNATIONAL SEARCH REPORT

| International application No. |
|---|
| PCT/JP94/01835 |

**A. CLASSIFICATION OF SUBJECT MATTER**

Int. Cl$^6$ C02F1/50, C02F1/28

According to International Patent Classification (IPC) or to both national classification and IPC

**B. FIELDS SEARCHED**

Minimum documentation searched (classification system followed by classification symbols)

Int. Cl$^6$ C02F1/50, C02F1/28

Documentation searched other than minimum documentation to the extent that such documents are included in the fields searched

Jitsuyo Shinan Koho          1940 - 1994
Kokai Jitsuyo Shinan Koho    1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, A, 4-22410 (Takuma K.K. (and two others)), January 27, 1992 (27. 01. 92), Claim, (Family: none) | 1, 3 |
| X | JP, A, 1-278408 (Matsushita Electric Ind. Co., Ltd.), November 8, 1989 (08. 11. 89), Claim, (Family: none) | 1, 3 |
| X | JP, A, 4-247233 (Osaka Gas Co., Ltd.), September 3, 1992 (03. 09. 92), Claim, line 30, column 1 to line 1, column 2, (Family: none) | 1-3 |
| X | JP, A, 63-239205 (Kanebo, Ltd. (and two others)), November 30, 1994 (30. 11. 94), Claim, line 1, column 6 to line 5, column 7, lines 3 to 10, column 9, (Family: none) | 1-3, 4-7 |
| Y | JP, A, 4-285005 (Kuraray Co., Ltd.), October 9, 1992 (09. 10. 92), | 8-11 |

[X] Further documents are listed in the continuation of Box C.     [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| January 5, 1995 (05. 01. 95) | January 24, 1995 (24. 01. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP94/01835

| C (Continuation). DOCUMENTS CONSIDERED TO BE RELEVANT | | |
|---|---|---|
| Category* | Citation of document, with indication, where appropriate, of the relevant passages | Relevant to claim No. |
| | Claim, (Family: none) | |
| Y | JP, A, 2-273588 (Ube Industries, Ltd.), November 8, 1990 (08. 11. 90), Claim, (Family: none) | 8-11 |
| Y | JP, A, 4-243591 (Kitazawa Valve K.K.), August 31, 1992 (31. 08. 92), Claim, (Family: none) | 8-16 |

Form PCT/ISA/210 (continuation of second sheet) (July 1992)